# EUROPEAN PATENT APPLICATION

(11) **EP 3 482 912 A1**
(43) Date of publication of application: **15.05.2019**
(21) Application number: 17200670.2
(22) Date of filing: 08.11.2017
(51) Int. Cl.: B29C 64/25, B33Y 30/00, B33Y 40/00, B29C 64/153

(54) **APPARATUS FOR ADDITIVELY MANUFACTURING THREE-DIMENSIONAL OBJECTS**

(71) Applicant: CL Schutzrechtsverwaltungs GmbH, 96215 Lichtenfels (DE)
(72) Inventor: Hofmann, Alexander, 96260 Weismain (DE); Winiarski, Daniel, 96231 Bad Staffelstein (DE); Stammberger, Jens, 96472 Rödental (DE)
(74) Representative: Hafner & Kohl

(57) **Abstract**

Apparatus (1) for additively manufacturing three-dimensional objects (2) by means of successive layerwise selective irradiation and consolidation of layers of a build material (3) which can be consolidated by means of an energy beam (4), the apparatus (1) comprising:
- a support construction (5);
- at least one functional unit (6 - 10) of the apparatus (1) being supported by the support construction (5);
- the at least one functional unit (6 - 10) is moveably supported relative to the support construction (5), whereby the at least one functional unit (6 - 10) is moveably supported between an operating position in which the at least one functional unit (6 - 10) is positioned inside the support construction (5) and a service position in which the at least one functional unit (6 - 10) is at least partially positioned outside the support construction (5).

## Description

The invention relates to an apparatus for additively manufacturing three-dimensional objects by means of successive layerwise selective irradiation and consolidation of layers of a build material which can be consolidated by means of an energy beam, the apparatus comprising a support construction and at least one functional unit being supported by the support construction.

Apparatuses for additively manufacturing three-dimensional objects are generally known. Exemplary embodiments of respective apparatuses are selective laser sintering apparatuses, selective laser melting apparatuses, and selective electron beam melting apparatuses, for instance. Yet, metal binder jetting apparatuses may also be considered as respective apparatuses.

Respective apparatuses typically comprise a support construction supporting a number of functional units of the respective apparatus. A support construction may be embodied as a support frame having a number of support interfaces at which functional units, e.g. a process chamber, of the apparatus are supported. Typically, each support interface is allocated to a specific functional unit, so that the functional units are to be disposed at specific positions of the support construction.

Hitherto, the support of respective functional units typically comprises a fixed attachment of the functional units to the support construction, i.e. once supported by the support construction, the functional units cannot be moved relative to the support construction. Yet, the fixed attachment of respective functional units may impede works, e.g. installation, service, or repair works, on specific functional units or the entire apparatus, respectively since it might be difficult to access specific functional units or support interfaces.

It is the object of the present invention to provide an apparatus for additively manufacturing three-dimensional objects allowing for improved accessibility to respective functional units, particularly in context with works, e.g. installation, service, or repair works, on functional units or the entire apparatus, respectively.

The object is achieved by an apparatus according to independent Claim 1. The Claims depending on Claim 1 relate to possible embodiments of the apparatus according to Claim 1.

The apparatus described herein (hereinafter "apparatus") is an apparatus for additively manufacturing three-dimensional objects, e.g. technical components, by means of successive layerwise selective irradiation and consolidation of layers of a build material - the build material may comprise at least one of a metal powder, a ceramic powder, or a polymer powder, for instance - which can be directly or indirectly consolidated by means of an energy beam. The energy beam may be an electron beam, a laser beam, or another optical beam, e.g. a UV beam, for instance. The apparatus can be a metal binder jetting apparatus, a selective laser sintering apparatus, a selective laser melting apparatus, or a selective electron beam melting apparatus, for instance.

The apparatus comprises a number of functional units each having at least one specific function during operation of the apparatus. The functional units are thus, operable or operated during operation of the apparatus. Each functional unit may comprise at least one functional sub-unit.

The apparatus comprises a support construction. The support construction is configured to support functional units of the apparatus. The support construction may comprise a number of support interfaces, e.g. mechanical interfaces such as bolts, bores, etc., respectively, being adapted to support at least one functional unit. Respective functional units may comprise corresponding support interfaces, e.g. mechanical interfaces such as bolts, bores, etc., so that respective support interfaces of the support construction and respective support interfaces of a respective functional unit may co-act resulting in that the respective functional unit is supported by the support construction.

The support construction may comprise a number of interconnected construction elements, e.g. strut elements, disposed in a frame-, rack- or scaffold-like spatial arrangement. The arrangement of the construction elements typically defines at least one interior space or volume of the support construction in which respective functional units may be arranged. The support construction may thus, have a frame-, rack- or scaffold like design; the support construction may thus, also be deemed or denoted a support frame, -rack, or -scaffold.

Housing elements, e.g. housing walls, may be attached to the support construction so that the support construction may build the basic construction of a housing construction of the apparatus.

As mentioned above, at least one functional unit of the apparatus is supported by the support construction. In order to improve accessibility to respective functional units being supported by the support construction, some or all of the functional units are moveably supported relative to the support construction between an operating position in which the respective functional unit is positioned (entirely) inside the support construction and a service position in which the respective functional unit is at least partly, particularly entirely, positioned outside the support construction. Hence, the support of a respective functional unit comprises a moveable support of the respective functional unit relative to the support construction between a functional unit specific operating position in which the respective functional unit is operably positioned (entirely) inside the support construction and thus, not or hardly accessible so that works can be performed, and a functional unit specific service position in which the respective functional unit is at least partly positioned outside the support construction and thus, easily accessible so that works can be performed. In other words, the at least one at least one functional device is accessible by service personnel outside the support construction when positioned in the service position so that works, e.g. installation, service, or repair works, can be easily performed.

A respective functional unit may be moved from a respective operating position to a respective service position and also from a respective service position to a respective operating position so that both the operating position and the service position can be deemed as a starting position for a respective motion of the respective functional unit. As a result, an apparatus having improved accessibility to respective functional units, particularly in context with works, e.g. installation, service, or repair works, on specific functional units or the entire apparatus, respectively is provided.

The support construction or the apparatus, respectively comprises or defines at least one motion axis, e.g. a rotational axis and/or translational axis, relative to which a respective moveably supported functional unit may be moved. Hence, a motion of a respective functional unit may be rotational and/or translational motion.

The support construction may comprise openings through which the respective functional unit can pass while moving from a respective operating position to a respective service position or vice versa. Respective openings may be provided with closing elements, e.g. lid elements, which are configured to (temporarily) close or seal the openings. Hence, respective openings can be opened only occasionally, i.e. in the case that a respective functional unit is moved from a respective operating position to a respective service position or vice versa. Respective openings may be provided above the ground the apparatus is installed on. Hence, the service position may be a hanging position in which the at least one functional unit hangs above ground. A hanging position may further improve accessibility to the respective functional unit and thus, further eases respective works.

The apparatus may comprise a guiding device for guiding a motion of the functional unit between the operating position and the service position or vice versa. The guiding device may comprise at least one, particularly longitudinal, guiding element, particularly a, e.g. telescopic, guiding rail, at least partially extendable or extending between the operating position and the service position. A respective guiding element may co-act with guiding elements, e.g. roller elements, slider elements, etc., provided with the respective functional unit whose motion is to be guided.

The apparatus may also comprise a drive device for at least semi-automatically driving the functional unit between the operating position and the service position or vice versa. A respective drive device is typically configured to generate a driving force moving a respective functional unit between the operating position and the service position or vice versa. A respective drive device may be provided with the support construction and/or the functional unit. A respective drive device may be built as or comprise a motor, e.g. an electric motor.

As mentioned above, the apparatus comprises a number of functional units and associated functional sub-units, respectively each having at least one specific function during operation of the apparatus. Exemplary embodiments of functional units and associated functional sub-units are as follows:
An exemplary functional unit may be a process chamber unit (hereinafter "process chamber"), in which the successive layerwise selective irradiation and consolidation of layers of build material takes place. The process chamber comprises wall elements or wall element portions delimiting an inner process chamber volume.

Another exemplary functional unit may be a build material application unit, e.g. a recoating unit, configured to apply layers of build material which is to be selectively irradiated and consolidated in the build plane of the apparatus. The build material application unit may comprise at least one functional sub-unit, e.g. a recoating blade, which is moveably supported relative to the build plane of the apparatus so as to apply respective build material layers.

Another exemplary functional unit may be an irradiation unit configured to selectively irradiate and thereby, consolidate portions of a layer of build material with at least one energy beam. The irradiation unit may comprise a functional sub-unit for generating an energy beam, e.g. a beam generating unit, and/or a functional sub-unit for deflecting an energy beam to different positions of the build plane, e.g. a beam deflecting unit.

Another exemplary functional unit may be a detection unit configured to detect at least one chemical and/or physical quantity related to the operation of the apparatus and/or related to a three-dimensional object which is additively build-up during operation of the apparatus. A respective quantity may be a process parameter of the apparatus, e.g. a chemical atmosphere, temperature, pressure in the process chamber, a streaming behavior of a process gas stream streaming through the process chamber, etc. A respective quantity may also be an object parameter of the three-dimensional object which is additively build-up during operation of the apparatus, e.g. density, temperature, geometry, etc. The detection unit may comprise a functional sub-unit, e.g. a sensor element, for detecting respective quantities.

Another exemplary functional unit may be a support unit configured to support a further functional unit or functional sub-unit, respectively. As an example, a respective support unit may be a support for a build material application unit or build material application sub-unit, e.g. a recoater blade, or a support for an irradiation unit or a functional sub-unit of the irradiation unit, e.g. a beam generating and/or a beam deflection unit, or a support for a detection unit or a functional sub-unit of the detection unit, e.g. a sensor element.

As will be apparent from below, two or more functional units may be connected with each other so as to form an assembly or group of functional units which can be separately handled, i.e. in particular separately moved between a respective operating position and a respective service position or vice versa.

At least one functional unit may comprise at least one service opening which is accessible by service personnel when the at least one functional unit is positioned in the service position. The service opening may be provided in a wall element or wall element portion of the respective functional unit. Hence, the service opening of a respective functional unit is arranged in such manner that it is at least accessible from outside the support construction when the functional unit is positioned in the service position. A respective service opening of a respective functional unit is preferably arranged outside the support construction when the functional unit positioned in the service position. A respective service opening may be provided with at least one closing element, e.g. a lid element, which is configured to (temporarily) close or seal the service opening during operation of the apparatus. A respective service opening is separate to an optional further opening, e.g. a front door or window, of the functional unit which is also accessible in the operating position of the functional unit. This particularly applies to the case that the functional unit is the process chamber.

As mentioned above, two or more functional units may be connected with each other so as to form an assembly or group of functional units which can be separately handled, i.e. in particular separately moved between a respective operating position and a respective service position or vice versa. As such, the apparatus may comprise at least two functional units, whereby a first functional unit is supported by the support construction and at least one further functional unit is supported by the first functional unit. The first functional unit is typically directly supported by the support construction, the at least one further functional unit is indirectly supported by the support construction via the first functional unit.

In this embodiment, the first functional unit may be moveably supported relative to the support construction, whereby the first functional unit is moveably supported between a respective operating position in which the first functional unit is positioned inside the support construction and a respective service position in which the first functional unit is at least partially positioned outside the support construction. The at least one further functional unit may be moveably supported relative to the first functional unit, whereby the at least one further functional unit is moveably supported between an operating position in which the at least one further functional unit is positioned at a first distance and/or orientation relative to the first functional unit and a service position in which the at least one further functional unit is positioned at a second distance and/or orientation relative to the first functional unit. Hence, the primary reference system for motions of the further functional unit is not the support construction, but the first functional unit.

A motion of a respective further functional unit may also be rotational and/or translational motion. Yet, the motion path of the further functional unit may be different from the motion path of the first functional unit. In other words, the first functional unit may be moveably supported in at least one first motion path and the at least one further functional unit may be moveably supported in a further motion path, whereby the further motion path is different from the first motion path.

The first functional unit may be the process chamber, the further functional unit may be one of the aforementioned functional units other than the process chamber. A respective further functional unit may thus, be a build material application unit for applying a build material layer in a build plane of the apparatus; or an irradiation unit for selectively irradiating a build material layer applied in the build plane of the apparatus; or a detection unit for detecting at least one chemical and/or physical quantity related to the operation of the apparatus, particularly at least one process parameter of the apparatus, or a three-dimensional object which is additively built-up during operation of the apparatus; or a support unit for supporting a further functional unit, particularly a build material application unit, an irradiation unit, or a detection unit.

The apparatus may comprise a locking device for locking a further functional unit in a respective first position. The locking device may be built as or comprise a suitable locking element which is configured to lock a respective further functional unit in the first position. A respective locking element may be configured to implement a mechanical locking of a respective further functional unit. Yet, other locking principles, e.g. a magnetic locking, are also conceivable.

The apparatus may further comprise a position detection device for detecting the position of the first functional unit. The position detection device may be built as or comprise a suitable detection element which is configured to detect the position of the first functional unit; the detection element may be particularly configured to detect when the first functional unit is positioned in the operating position. A respective detection element may be configured to implement an optical detection of the position of the first functional unit. Yet, other detection principles, e.g. an electrical detection, are also conceivable. Of course, the or a further position detection unit for detecting the position of the further functional unit may be provided.

The locking device may be operably connected with the position detection device. The locking device may be operable to lock the at least one further functional unit in the first position when the detection device detects that the first functional unit is positioned in the operating position. Locking of the further functional unit in the first position when the detection device detects that the first functional unit is positioned in the operating position may enhance safety of the apparatus.

The invention further relates to a support construction for supporting at least one functional unit of an apparatus as specified above. The support construction is configured to moveably support at least one functional unit between an operating position in which the at least one functional unit is positioned inside the support construction and a service position in which the at least one functional unit is at least partially positioned outside the support construction. All annotations regarding the apparatus also apply to the support construction.

The invention further relates to a method for performing works, particularly service, repair or installation works, of an apparatus as specified above. The method comprises the steps of: moving the at least one functional unit being moveably supported relative to the support construction from an operating position in which the at least one functional unit is positioned inside the support construction to a service position in which the at least one functional unit is at least partially positioned outside the support construction; and/or moving the at least one functional unit being moveably supported relative to the support construction from a service position in which the at least one functional unit is at least partially positioned outside the support construction to an operating position in which the at least one functional unit is positioned inside the support construction. All annotations regarding the apparatus also apply to the method.

Exemplary embodiments of the invention are described with reference to the Fig., whereby:
- Fig. 1, 2: each show a principle drawing of an apparatus for additively manufacturing three-dimensional objects according to an exemplary embodiment; and
- Fig. 3: shows an enlarged view of the detail III of Fig. 1.

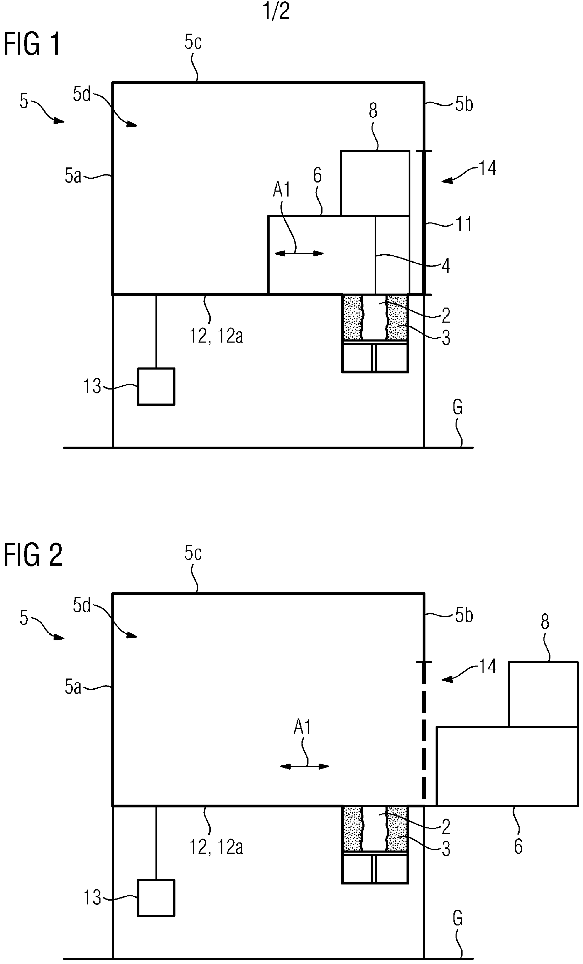

Fig. 1 shows a principle drawing of an exemplary embodiment of an apparatus 1 for additively manufacturing three-dimensional objects 2, e.g. technical components, by means of successive layerwise selective irradiation and accompanying consolidation of layers of a powdered build material 3, e.g. a metal powder, which can be consolidated by means of at least one energy beam 4, e.g. a laser beam, according to an exemplary embodiment. The apparatus 1 can be a selective laser melting apparatus, for instance.

The apparatus 1 comprises a support construction 5. The support construction 5 is configured to support functional units 6 - 8 of the apparatus 1. The support construction 1 may comprise a number of interconnected construction elements 5a - 5c, e.g. strut elements, disposed in a frame-, rack- or scaffold-like spatial arrangement. The arrangement of the construction elements 5a - 5c defines an interior space or volume 5d of the support construction 5 in which respective functional units 6 - 8 may be arranged. The support construction 5 thus, has a frame-, rack- or scaffold like design and may thus, also be deemed or denoted a support frame, -rack, or -scaffold.

Housing elements, e.g. housing walls, may be attached to the support construction 5 so that the support construction 5 may build the basic construction of a housing construction of the apparatus 1.

In order to improve accessibility to respective functional units 6 - 10 being supported by the support construction 5, some or all of the functional units 6 - 10 are moveably supported relative to the support construction 5 between an operating position (see Fig. 1) in which the respective functional unit 6 - 10 is positioned inside the support construction 5 and a service position (see Fig. 2) in which the respective functional unit 6 - 10 is at least partly, particularly entirely, positioned outside the support construction 5. Hence, the support of respective functional units 6 - 10 comprises a moveable support of the respective functional units 6 - 10 relative to the support construction 5 between a functional unit specific operating position in which the respective functional unit 6 - 10 is operably positioned inside the support construction 5 and thus, not or hardly accessible so that works can be performed, and a functional unit specific service position in which the respective functional 6 - 10 unit is at least partly positioned outside the support construction 5 and thus, easily accessible so that works can be performed. In other words, the respective functional device 6 - 10 is accessible by service personnel outside the support construction 5 when positioned in the service position so that works, e.g. installation, service, or repair works, can be easily performed.

As indicated by double arrow A1, a respective functional unit 6 - 10 may be moved from a respective operating position to a respective service position and also from a respective service position to a respective operating position so that both the operating position and the service position can be deemed as a starting position for a respective motion of the respective functional unit 6 - 10.

As also indicated by double arrow A1, the support construction 5 or the apparatus 1, respectively comprises or defines at least one motion axis, e.g. a translational axis, relative to which a respective moveably supported functional unit 6 - 10 may be moved. Hence, a motion of a respective functional unit may be translational motion. Yet, rotational motions are conceivable as well.

The support construction 5 may comprise an opening 14 through which the respective functional unit 6 - 10 can pass while moving from a respective operating position to a respective service position or vice versa. The opening 14 may be provided with a closing element 11, e.g. a lid element, which is configured to (temporarily) close or seal the opening 14. Hence, the opening 14 can be opened only occasionally, i.e. in the case that a respective functional unit 6 - 10 is moved from a respective operating position to a respective service position or vice versa.

As is apparent from Fig. 1, 2 the opening 14 may be provided above the ground G the apparatus 1 is installed on. Hence, the service position may be a hanging position in which the functional unit 6 - 10 hangs above ground G.

The apparatus 1 comprises a guiding device 12 for guiding a motion of the functional unit 6 - 10 between the operating position and the service position or vice versa. The guiding device 12 may comprise longitudinal guiding element 12a, particularly a, e.g. telescopic, guiding rail, at least partially extendable or extending between the operating position and the service position. The guiding element 12a may co-act with guiding elements (not shown), e.g. roller elements, slider elements, etc., provided with the respective functional unit 6 - 10 whose motion is to be guided.

The apparatus 1 may also comprise a drive device 13 (optional) for at least semi-automatically driving the functional unit 6 - 10 between the operating position and the service position or vice versa. A respective drive device 13, which may be built as or comprise a motor, e.g. an electric motor, is configured to generate a driving force moving a respective functional unit 6 - 10 between the operating position and the service position or vice versa. As is apparent from Fig. 1, 2, a respective drive device 13 may be provided with the support construction 5. Yet, providing the drive device with the functional unit 6 - 10 is also conceivable.

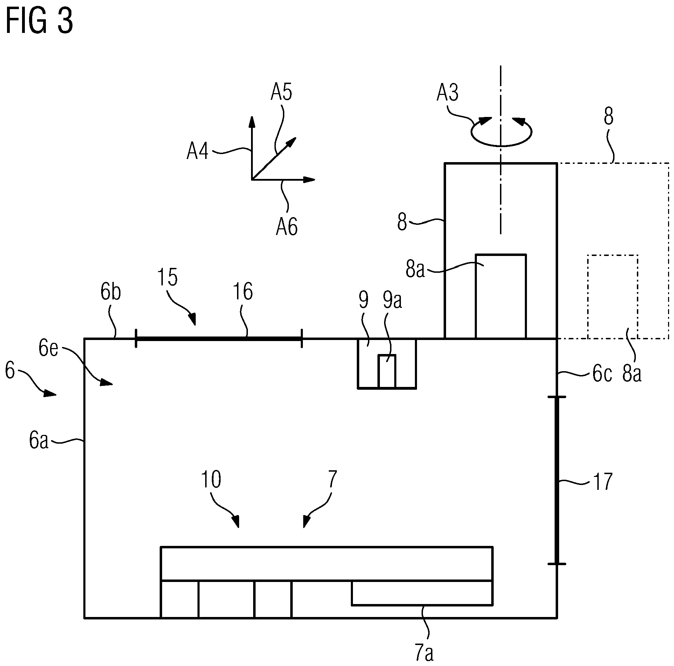

Exemplary embodiments of respective functional units 6 - 10 which are shown in the exemplary embodiment are (see also Fig. 3):
A first exemplary functional unit 6 is a process chamber, in which the successive layerwise selective irradiation and consolidation of layers of build material 3 takes place. The process chamber comprises wall elements 6a - 6d delimiting an inner process chamber volume 6e.

Another exemplary functional unit 7 is a build material application unit, e.g. a recoating unit, configured to apply layers of build material 3 which is to be selectively irradiated and consolidated in the build plane of the apparatus 1. The build material application unit comprises at least one functional sub-unit, e.g. a recoating blade 7a, which is moveably supported relative to the build plane of the apparatus 1 so as to apply respective build material layers.

Another exemplary functional unit 8 is an irradiation unit configured to selectively irradiate and thereby, consolidate portions of a layer of build material 3 an energy beam 4. The irradiation unit comprises a functional sub-unit for generating an energy beam, e.g. a beam generating unit, and/or a functional sub-unit for deflecting an energy beam to different positions of the build plane, e.g. a beam deflecting unit 8a.

Another exemplary functional unit 9 is a detection unit configured to detect at least one chemical and/or physical quantity related to the operation of the apparatus 1 and/or related to a three-dimensional object 2 which is additively build-up during operation of the apparatus 1. A respective quantity may be a process parameter of the apparatus 1, e.g. a chemical atmosphere, temperature, pressure in the process chamber, a streaming behavior of a process gas stream streaming through the process chamber, etc. A respective quantity may also be an object parameter of the three-dimensional object 2 which is additively build-up during operation of the apparatus 1, e.g. density, temperature, geometry, etc. The detection unit may comprise a functional sub-unit, e.g. a sensor element 9a, for detecting respective quantities.

Another exemplary functional unit 10 is a support unit configured to support a further functional unit 7 or functional sub-unit, respectively. According to the exemplary embodiment of Fig. 1, 2, the support unit is a support for the build material application unit or build material application sub-unit, e.g. a recoater blade.

As is apparent from Fig. 2, 3, a functional unit 6 - 10, i.e. functional unit 6 (process chamber), may comprise a service opening 15 which is accessible by service personnel when the functional unit 6 is positioned in the service position. The service opening 15 is provided in wall element 6b of the respective functional unit 6. As is clear from Fig. 2, 3, the service opening 15 is arranged in such manner that it is at least accessible from outside the support construction 5 when the functional unit 6 is positioned in the service position. The service opening 15 is arranged outside the support construction 5 when the functional unit 6 is positioned in the service position. The service opening 15 is also provided with a closing element 16, e.g. a lid element, which is configured to (temporarily) close or seal the service opening 15 during operation of the apparatus 1.

Fig. 3 clearly shows that the service opening 6 is separate to a further opening 17, e.g. a front door or window, of the functional unit 6 which is also accessible in the operating position of the functional unit.

As is also apparent from Fig. 3, two or more functional units 6 - 10 may be connected with each other so as to form an assembly or group of functional units 6 - 10 which can be separately handled, i.e. in particular separately moved between a respective operating position and a respective service position or vice versa. As such, a first functional unit, i.e. functional unit 6, is directly supported by the support construction 5 and further functional units 7 - 10 are indirectly supported by the support construction 5 via the first functional unit 6.

As such, the first functional unit 6 is moveably supported between a respective operating position (see Fig. 1) and a respective service position (see Fig. 2). Yet, as indicated by arrows A3 - A6 at least one further functional unit 7 - 10, e.g. functional unit 8 in the Fig., may be moveably supported relative to the first functional unit 6. Thereby, the further functional unit 8 is moveably supported between an operating position (see Fig. 3) in which the further functional unit 8 is positioned at a first distance and/or orientation relative to the first functional unit 6 and a service position (see Fig. 3 dashed line) in which the further functional unit 8 is positioned at a second distance and/or orientation relative to the first functional unit 6. Hence, the primary reference system for motions of the further functional unit 8 is not the support construction 5, but the first functional unit 6. As also indicated by arrows A3 - A6, a motion of the further functional unit 8 may also be rotational and/or translational motion. Thus, the motion path of the further functional unit 8 may be different from the motion path of the first functional unit 6.

The apparatus 1 may comprise a locking device (not shown) for locking the further functional unit 8 in a respective first position. The locking device may be built as or comprise a suitable locking element which is configured to lock the further functional unit 8 in the first position. The locking element may be configured to implement a mechanical locking of a respective further functional unit. Yet, other locking principles, e.g. a magnetic locking, are also conceivable.

The apparatus 1 may further comprise a position detection device (not shown) for detecting the position of the first functional unit 6. The position detection device may be built as or comprise a suitable detection element which is configured to detect the position of the first functional unit 6; the detection element may be particularly configured to detect when the first functional unit 6 is positioned in the operating position. A respective detection element may be configured to implement an optical detection of the position of the first functional unit 6. Yet, other detection principles, e.g. an electrical detection, are also conceivable. Of course, the or a further position detection unit for detecting the position of the further functional unit 8 may also be provided.

The locking device may be operably connected with the position detection device. The locking device may be operable to lock the further functional unit 8 in the first position when the detection device detects that the first functional unit 6 is positioned in the operating position.

The apparatus 1 allows for implementing a method for performing works, particularly service, repair or installation works, of the apparatus 1. The method comprises the steps of: moving the at least one functional unit 6 - 10 being moveably supported relative to the support construction 5 from an operating position in which the at least one functional unit 6 - 10 is positioned inside the support construction 5 to a service position in which the at least one functional unit 6 - 10 is at least partially positioned outside the support construction 5; and/or moving the at least one functional unit 6 - 10 being moveably supported relative to the support construction 5 from a service position in which the at least one functional unit 6 - 10 is at least partially positioned outside the support construction 5 to an operating position in which the at least one functional unit 6 - 10 is positioned inside the support construction 5.

## Claims

1. Apparatus (1) for additively manufacturing three-dimensional objects (2) by means of successive layerwise selective irradiation and consolidation of layers of a build material (3) which can be consolidated by means of an energy beam (4), the apparatus (1) comprising:
- a support construction (5);
- at least one functional unit (6 - 10) of the apparatus (1) being supported by the support construction (5);
- the at least one functional unit (6 - 10) is moveably supported relative to the support construction (5), whereby the at least one functional unit (6 - 10) is moveably supported between an operating position in which the at least one functional unit (6 - 10) is positioned inside the support construction (5) and a service position in which the at least one functional unit (6 - 10) is at least partially positioned outside the support construction (5).

2. Apparatus according to Claim 1, **wherein** the support construction (5) comprises at least one opening (10) through which the respective functional unit (6 - 10) can pass while moving from a respective operating position to a respective service position or vice versa.

3. Apparatus according to Claim 1 or 2, **wherein** the at least one functional unit (6 - 10) is or comprises
a process chamber unit; or
a build material application unit for applying a build material layer in a build plane of the apparatus (1); or
an irradiation unit for selectively irradiating a build material layer applied in the build plane of the apparatus (1); or
a detection unit for detecting at least one chemical and/or physical quantity related to the operation of the apparatus (1), particularly at least one process parameter of the apparatus, or a three-dimensional object (2) which is additively build-up during operation of the apparatus (1); or
a support unit for supporting a further functional unit, particularly a build material application unit, an irradiation unit, or a detection unit.

4. Apparatus according to any of the preceding Claims, **wherein** the at least one functional unit (6 - 10) comprises at least one service opening (15) which is accessible by service personnel when the at least one functional unit (6 - 10) is positioned in the service position.

5. Apparatus according to any the preceding Claims, **comprising** at least two functional units (6 - 10), whereby a first functional unit (6) is supported by the support construction (5) and at least one further functional unit (7 - 10) is supported by the first functional unit (6).

6. Apparatus according to Claim 5, **wherein** the first functional unit (6) is moveably supported relative to the support construction (5), whereby the first functional unit (6) is moveably supported between an operating position in which the first functional unit (6) is positioned inside the support construction (5) and a service position in which the first functional unit (6) is at least partially positioned outside the support construction (5), and the at least one further functional unit (7 - 10) is moveably supported relative to the first functional unit (6), whereby the at least one further functional unit (7 - 10) is moveably supported between an operating position in which the at least one further functional unit (7 - 10) is positioned at a first distance and/or orientation relative to the first functional unit (6) and a service position in which the at least one further functional unit (7 - 10) is positioned at a second distance and/or orientation relative to the first functional unit (6).

7. Apparatus according to Claim 6, **wherein** the first functional unit (6) is moveably supported in at least one first motion path and the at least one further functional unit (7 - 10) is moveably supported in a further motion path, whereby the further motion path is different from the first motion path.

8. Apparatus according to any of Claims 5 - 7, **comprising** a locking device for locking the at least one further functional unit (7 - 10) in the first position.

9. Apparatus according to Claim 8, **comprising** a position detection device for detecting the position of the first functional unit (6), whereby the locking device is operable to lock the at least one further functional unit (7 - 10) in the first position when the detection device detects that the first functional unit (6) is positioned in the operating position.

10. Apparatus according to any of Claims 5 - 9, **wherein** the first functional unit (6) is a process chamber; and
the at least one further functional unit (8) is a build material application unit for applying a build material layer in a build plane of the apparatus; or an irradiation unit for selectively irradiating a build material layer applied in the build plane of the apparatus; or
a detection unit for detecting at least one chemical and/or physical quantity related to the operation of the apparatus, particularly at least one process parameter of the apparatus, or a three-dimensional object which is additively built-up during operation of the apparatus; or
a support unit for supporting a further functional unit, particularly a build material application unit, an irradiation unit, or a detection unit.

11. Apparatus according to any of the preceding Claims, **comprising** a guiding device (12) for guiding a motion of the at least one functional unit (6 - 10) between the operating position and the service position or vice versa.

12. Apparatus according to Claim 11, **wherein** the guiding device (12) comprises at least one, particularly longitudinal, guiding element (12a), particularly a guiding rail, at least partially extendable or extending between the operating position and the service position.

13. Apparatus according to any of the preceding Claims, **comprising** a drive device for driving the functional unit (6 - 10) between the operating position and the service position or vice versa.

14. Apparatus according to any of the preceding Claims, **wherein** the service position is a hanging position in which the at least one functional unit (6 - 10) hangs above ground (G).

15. Support construction (5) for supporting at least one functional unit (6 - 10) of an apparatus (1) according to any of the preceding Claims, the support construction (5) being configured to moveably support at least one functional unit (6 - 10) between an operating position in which the at least one functional unit (6 - 10) is positioned inside the support construction (5) and a service position in which the at least one functional unit (6 - 10) is at least partially positioned outside the support construction (5).

16. Method for performing works, particularly service, repair or installation works, of an apparatus (1) for additively manufacturing three-dimensional objects (2) according to any of Claims 1 - 14, the method comprising:
moving the at least one functional unit (6 - 10) being moveably supported relative to the support construction (5) from an operating position in which the at least one functional unit (6 - 10) is positioned inside the support construction (5) to a service position in which the at least one functional unit (6 - 10) is at least partially positioned outside the support construction (5); and/or
moving the at least one functional unit (6 - 10) being moveably supported relative to the support construction (5) from a service position in which the at least one functional unit (6 - 10) is at least partially positioned outside the support construction (5) to an operating position in which the at least one functional unit (6 - 10) is positioned inside the support construction (5).
